# EUROPEAN PATENT SPECIFICATION

(11) **EP 0 638 209 B1**
(45) Date of publication and mention of the grant of the patent: **04.09.1996**
(21) Application number: 93908968.6
(22) Date of filing: 19.04.1993
(51) Int. Cl.: H02G 3/22

(54) **CABLE GROUNDING LEAD-THROUGH**
KABELDURCHFÜHRUNG MIT ERDUNG
DISPOSITIF DE TRAVERSEE POUR LA MISE A LA TERRE DE CABLES

(30) Priority: 27.04.1992 FI 921878
(43) Date of publication of application: 15.02.1995
(73) Proprietor: NOKIA TELECOMMUNICATIONS OY, 02600 Espoo (FI)
(72) Inventor: PÄÄKKÖNEN, Kyösti, FIN-00980 Helsinki (FI)
(74) Representative: Tomlinson, Kerry John
(86) International application number: FI9300161
(87) International publication number: WO9322815

(56) References cited:
- US-A- 3 830 954

## Description

### Cable grounding lead-through

The invention relates to a cable grounding lead-through comprising a conductive support and means attached to it for leading through and grounding cables, said means comprising at least two conductive plates and a conductive gasket disposed on both sides of each plate, the plates being arranged adjacently to one another in such a manner that the gaskets of each adjacent plate are in close contact with each other.

Such grounding lead-throughs are used in EMC-shielded devices, in which case cables are grounded through the support to the ground potential of the device, for example to the frame of the device.

A grounding lead-through comprising superimposed earth plates with EMC gaskets is previously known, e.g. from US-A-3830954 on which the preamble to claim 1 is based. In this solution, cables are stripped at the gaskets and inserted between the gaskets of the superimposed plates, the gaskets being in contact with each other. The cabling is effected in layers from below upwards, and the superimposed plates are secured from both edges in the direction of the cables to the vertical side walls of the metal support by means of screws. Finally the structure obtained in this way is closed by a separate cover.

The most serious drawback of the known grounding lead-through described above is that it is very difficult to do any changes to it. If the grounding must be changed, for example by grounding an additional cable, almost the whole construction must first be disassembled, i.e. the cover must be removed, the fixing screws of the plates must be opened, and a necessary number of plates with cables between them must be detached, and finally the same operations must be carried out in reverse order. The known lead-through is also disadvantageous itself owing to its complicated structure.

The primary object of the present invention is to remove the drawbacks of the known structure described above. This is achieved with a grounding lead-through of the invention, which is characterized in that the support is formed as a rail and the plates are secured substantially perpendicularly from only one edge to the support, whereby the cables to be led through and grounded can be inserted between adjacent gaskets from the side opposite to the support.

The invention is based on the idea of securing the plates merely from one edge adjacently to a rail-like support formed in an appropriate manner, whereby the cables can simply be inserted between adjacent gaskets that are in contact with each other from the "free" edges of the plates - and the grounding lead-through is finished.

The insertion of cables between the gaskets can be effected very easily and rapidly, particularly when the gasket is formed from a piece which is cut from a flexible ribbon-like material and bent on both sides of the plate around the edge of the plate opposite to the support.

It is also easy to secure the plates to the support without screws or any other corresponding loose fixing means. This can be done, for example, by means of brackets provided in the plates, and openings and gaps provided in the support for cooperating with said brackets and an edge of the plate, or by means of fixing based on flexibility or deformation of the parts, which speeds up considerably the making of a grounding lead-through.

When all the cables are inserted between the gaskets, the ends of the plates that are opposite to the support should preferably be combined with each other by at least one transverse guiding comb to prevent possible straggling of the plates.

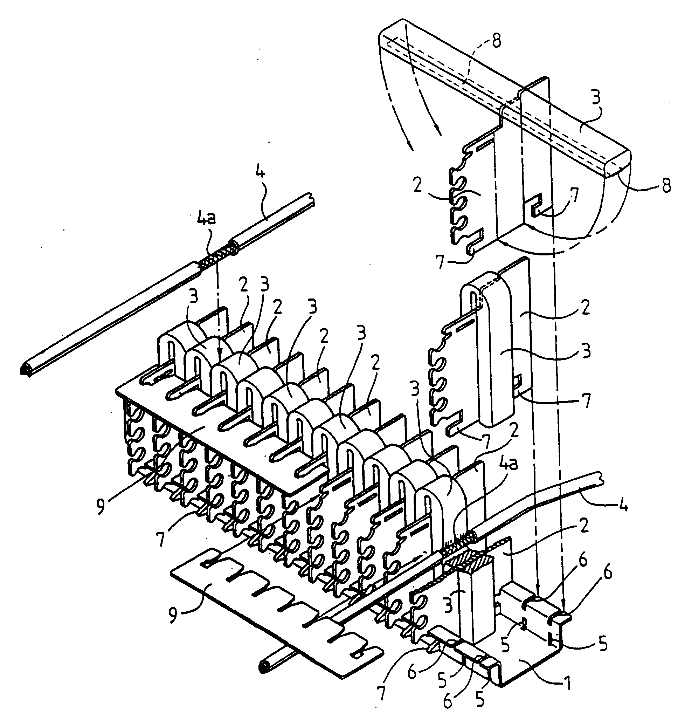

In the following, the invention will be described in greater detail by means of a preferred embodiment with reference to the accompanying drawing which is a perspective view of a grounding lead-through of the invention.

The grounding lead-through illustrated in the drawing comprises a conductive support 1, conductive plates 2 secured to it, and conductive gaskets disposed on both sides of said plates. The cables 4 to be grounded and led through are intended to be inserted between adjacent gaskets 3.

The support 1 is formed of a profiled metal rail, to which the plates 2 are secured perpendicularly and at such lateral distance from each other that the gaskets of each adjacent plate 2 are in close contact with each other. The fixing is effected by means of openings 5 and gaps 6 provided in the rail 1, and one edge of the plate 2 and the brackets 7 provided in it. The fixing of the plates 2 is thus effected by inserting them into the rail 1 from the side and vertically with respect to it so that the brackets 7 penetrate into the openings 5, and part of the edge of each plate 2 penetrates into the gaps 6. To ensure the fixing, the brackets 7 are turned 30° to 45° upon penetration into the openings 5.

The gaskets 3 which are attached around the plates 2 before the plates are secured to the rail 1 are formed from pieces which are cut from a flexible ribbon-like material and bent on both sides of the plate 2 around the edge of the plate 2 opposite to the rail 1. The width and thickness of the plate 2 are not significant. The gasket 3 and the plate 2 may be, for instance, of the same width. The plate 2 may also be thicker than the gasket 3 in order for wider spacing to be achieved, for example. The gaskets 3 are preferably fixed to the plates 2 by means of narrow sticker strips 8 attached to the gaskets 3. Stickers attached merely to the ends of the gaskets or a dotted line of glue are also conceivable.

As the plate/gasket assemblies are secured in this manner adjacently only from one edge to the rail 1, the cables 4 can be grounded and led through simply by inserting the cables 4 between adjacent gaskets 3 from the side opposite to the rail 1, i.e. from above in the drawing, and the grounding lead-through is substantially finished. Before the cables 4 are inserted between the gaskets, they are stripped at the grounding part substantially for the width of the gasket 3, whereby the stripped part 4a of a cable 4 is grounded between adjacent gaskets 3. Several cables 4 can be grounded in the same gap, and their width may vary considerably, as the grounding is ensured by the flexibility of the gaskets 3.

When the cables 4 have been inserted in position, the ends of the plates 2 that are opposite to the rail 1 should preferably be combined by transverse guiding combs 9 which prevent straggling of the plates 2.

A finished grounding lead-through assembly is secured from the rail 1 to the frame of an EMC-shielded device (not shown), for example. The cover of this device can be arranged to be in close contact with the gaskets 3 to form a tight assembly.

The invention has been described above by means of only one preferred embodiment, but one skilled in the art can modify its details in several alternative ways within the scope of the appended claims.

## Claims

1. A cable grounding lead-through comprising a conductive support (1) and means (2, 3) attached to it for leading through and grounding cables (4), said means comprising at least two conductive plates (2) and a conductive gasket (3) disposed on both sides of each plate (2), the plates being arranged adjacently to one another in such a manner that the gaskets (3) of each adjacent plate (2) are in close contact with each other, characterized in that the support is formed as a rail and the plates (2) are secured substantially perpendicularly from only one edge to the support (1), whereby the cables (4) to be led through can be inserted between adjacent gaskets (3) from the side opposite to the support (1).

2. A grounding lead-through according to claim 1, characterized in that the gasket (3) is formed of a piece which is cut from a flexible ribbon-like material and bent on both sides of the plate (2) around the edge of the plate (2) that is opposite to the rail (1).

3. A grounding lead-through according to claim 1 or 2, characterized in that the support (1) is a profiled metal rail provided with openings (5) and gaps (6) which cooperate with an edge of each plate (2) and brackets (7) provided in it to effect the fixing of the plate (2).

4. A grounding lead-through according to any one of the preceding claims, characterized in that the ends of the plates (2) opposite to the support (1) are combined with each other by a transverse guiding comb (9).

## Patentansprüche

1. Erdungsdurchrührung für Kabel, die einen leitenden Träger (1) und daran angebrachte Einrichtungen (2, 3) aufweist, um die Kabel (4) hindurchzuführen und zu erden, wobei die Einrichtungen mindestens zwei leitfähige Platten (2) und eine leitfähige Dichtung (3) aufweisen, die an beiden Seiten von jeder Platte (2) angeordnet ist, wobei die Platten einander benachbart in der Weise angeordnet sind, daß die Dichtungen (3) von jeder benachbarten Platte (2) in dichtem Kontakt miteinander sind,
dadurch gekennzeichnet,
daß der Träger als eine Schiene ausgebildet ist und die Platten (2) im wesentlichen senkrecht nur von der einen Kante aus an dem Träger (1) befestigt sind, so daß die hindurchzuführenden Kabel (4) zwischen benachbarten Dichtungen (3) von der Seite eingesetzt werden können, die dem Träger (1) gegenüberliegt.

2. Erdungsdurchführung nach Anspruch 1,
dadurch gekennzeichnet,
daß die Dichtung (3) aus einem Stück gebildet ist, das von einem flexiblen bandartigen Material abgeschnitten ist und um die Kante der Platte (2), die der Schiene (1) gegenüberliegt, an beiden Seiten der Platte (2) herumgebogen ist.

3. Erdungsdurchführung nach Anspruch 1 oder 2,
dadurch gekennzeichnet,
daß der Träger (1) eine profilierte Metallschiene ist, die mit Öffnungen (5) und Spalten (6) versehen sind, die mit einer Kante von jeder Platte (2) zusammenwirken, und daß Stützen (7) an der Platte (2) vorgesehen sind, um die Befestigung der Platte (2) zu bewirken.

4. Erdungsdurchführung nach einem der vorhergehenden Ansprüche,
dadurch gekennzeichnet,
daß die Enden der Platten (2), die dem Träger (1) gegenüberliegen, mit einem quer verlaufenden Führungskamm (9) miteinander kombiniert sind.

## Revendications

1. Dispositif de traversée pour la mise à la terre de câbles, comprenant un support conducteur (1) et des moyens (2,3) qui y sont attachés pour la traversée et la mise à la terre de câbles (4), lesdits moyens comprenant au moins deux plaques conductrices (2) et un Joint conducteur (3) disposé de part et d'autre de chaque plaque (2), les plaques étant agencées pour être proches les unes des autres de manière à ce que les joints (3) de plaques voisines (2) soient en contact étroit entre eux, caractérisé en ce que le support a la forme d'un rail et que seul un bord des plaques est maintenu sensiblement perpendiculairement sur le support (1), moyennant quoi, les câbles (4) que l'on veut faire traverser peuvent être insérés entre des joints adjacents (3) depuis le côté opposé au support (1).

2. Dispositif de traversée pour la mise à la terre selon la revendication 1,
caractérisé en ce que le joint (3) est formé d'une pièce découpée dans une matière souple en bande et repliée des deux côtés de la plaque (2), autour du bord de la plaque (2) situé à l'opposé du rail (1).

3. Dispositif de traversée pour la mise à la terre selon la revendication 1 ou 2,
caractérisé en ce que le support (1) est un rail profilé en métal présentant des ouvertures (5) et des intervalles (6) qui coopèrent avec un bord de chaque plaque (2), ainsi que des pattes (7) prévues pour la fixation de la plaque (2).

4. Dispositif de traversée pour la mise à la terre selon l'une quelconque des revendications précédentes,
caractérisé en ce que les extrémités des plaques (2) situées à l'opposé du support (1) sont reliées entre elles par un peigne transversal de guidage (9).
